# EUROPEAN PATENT APPLICATION

(11) **EP 4 579 328 A1**
(43) Date of publication of application: **02.07.2025**
(21) Application number: 23220400.8
(22) Date of filing: 27.12.2023
(51) Int. Cl.: G02F 1/137

(54) **SWITCHABLE GLAZING**

(71) Applicant: AGP Worldwide Operations GmbH, 6300 Zug (CH)
(72) Inventor: SHIN, Yunho, Canton, Michigan, 48188 (US); ECHEVERRI ECHEVERRI, Mauricio, Canton, Michigan, 48188 (US)
(74) Representative: ABG Intellectual Property Law, S.L.

(57) **Abstract**

The present invention falls in the field of automotive glazing and, more particularly, in the field of switchable glazing, such as smart windows or roofs. The invention provides an automotive glazing comprising a first glass layer, a second glass layer, at least one bonding layer and at least one reverse mode switchable liquid crystal cell.

## Description

### FIELD OF THE INVENTION

The present invention falls in the field of automotive glazing and, more particularly, in the field of switchable glazing, such as smart windows or roofs.

### BACKGROUND OF THE INVENTION

Switchable devices have emerged as a class of next generation optoelectronics with the development of smart switchable glazing, such as smart windows or roofs. In general, switchable glazing comprises a liquid crystal layer having a liquid crystal material controllable by an electric field generated when a voltage is applied. Thus, by applying a voltage, the properties of the liquid crystal change and the glazing can be switched from one state to another state.

Most of the known switchable glazing suffer from the drawback of having only one function: either radiant energy flow control or privacy control. Also, many switchable glazing (known as normal mode switchable glazing) are opaque in the absence of an applied voltage, which makes them unsuitable for being used as automotive windows.

Different approaches exist for improving the performance and achieving reverse mode (i.e. clear with zero volts) of the switchable glazing. Some solutions use a polymer to stabilize the liquid crystal layer (Polymer Stabilized Cholesteric Texture, PSCT), but this results in an undesired hazy clear state in the absence of an applied voltage, thus making the glazing unsuitable to be used for side windows in automotive applications. PSCTs are also susceptible to pressure, which makes them harder to process into laminated glass products. Other solutions add a polarizer to the liquid crystal layer, which increases production costs and complicates the manufacturing process. There is also a risk of an unexpected thermal expansion of the polarizer caused by heating during the manufacturing process, which would result in deficient performance of the glazing. Another example of prior art is the use of vertical alignment layers to induce reverse mode, but said system also deforms easily under mechanical pressure, thus increasing the complexity of applications.

### DESCRIPTION OF THE INVENTION

The present invention provides a solution for the above-mentioned issues by an automotive glazing according to claim 1, an automotive glazing system according to claim 10, an automotive roof or sidelite window according to claim 15 and a vehicle as defined herein. In the dependent claims, embodiments of the invention are defined.

In a first inventive aspect, the invention provides an automotive glazing comprising:
- a first glass layer having an outer major surface and an inner major surface, wherein the outer major surface is opposite to the inner major surface;
- a second glass layer having an inner major surface and an outer major surface, wherein the outer major surface is opposite to the inner major surface;
- at least one bonding layer arranged between the inner major surface of the first glass layer and the inner major surface of the second glass layer;
- at least one reverse mode switchable liquid crystal cell arranged between the inner major surface of the first glass layer and the inner major surface of the second glass layer;
wherein the at least one switchable liquid crystal cell comprises a liquid crystal mixture comprising a liquid crystal material, a dimer and at least one dye, wherein the liquid crystal mixture has a negative dielectric anisotropy; and wherein the at least one switchable liquid crystal cell comprises at least one planar alignment layer.

The glazing of the present invention comprises a first glass layer and a second glass layer. In some embodiments, the glazing may comprise one or more additional glass layers. The glazing is a laminate.

The first glass layer has an outer major surface and an inner major surface. Similarly, the second glass layer has an inner major surface and an outer major surface. The inner major surface of the first glass layer is arranged facing the inner major surface of the second glass layer. In an embodiment, in an operating position of the glazing, with the glazing mounted as part of a vehicle, the outer major surface of the first glass layer is the surface of the glazing facing the exterior of the vehicle and the outer major surface of the second glass layer is the surface of the glazing facing the interior of the vehicle.

At least one bonding layer is arranged between the inner major surface of the first glass layer and the inner major surface of the second glass layer.

The glazing of the present invention also comprises a switchable liquid crystal cell arranged between the inner major surface of the first glass layer and the inner major surface of the second glass layer. The at least one switchable liquid crystal cell comprises a liquid crystal mixture, wherein the liquid crystal mixture comprises a liquid crystal material, a dimer and at least one dye. The liquid crystal mixture has a negative dielectric anisotropy. The switchable liquid crystal cell also comprises at least one planar alignment layer. The switchable liquid crystal cell may comprise one or more additional layers.

The absorption and scattering of light passing through the switchable liquid crystal cell are controllable by an applied voltage. Optical absorption affects the direct visible transmission, and thus the radiant energy flow, through the switchable liquid crystal cell and the glazing. Optical scattering affects the haze of the switchable liquid crystal cell and thus the privacy provided by the glazing, higher scattering resulting in higher haze (i.e. higher privacy).

Therefore, different states of the switchable liquid crystal cell can be defined as a function of the applied voltage, said states affecting the haze and the direct visible transmission of the switchable liquid crystal cell, thus also affecting the haze and the direct visible transmission of the automotive glazing. In this way, by controlling the optical properties of the switchable liquid crystal cell, the optical properties of the glazing are also controllable.

In the absence of an applied voltage, the switchable liquid crystal cell of the present invention is in an optically absorbing but non-scattering state. In this state, the radiant energy flow is defined without power consumption. Also, since the liquid crystal cell is in a non-scattering state, haze is low and visibility through the glazing is allowed when no voltage is applied. This makes the switchable liquid crystal cell a reverse mode switchable device usable in windows, such as sidelite windows, for automotive applications.

When an alternating-current (AC) drive voltage is applied, the switchable liquid crystal cell is switched to an optical scattering and absorbing state by the flexoelectric effect induced by the dimer present in the liquid crystal mixture. When voltage is applied, the direct visible transmission through the switchable liquid crystal cell is lower than in the absence of applied voltage. Also, since the liquid crystal cell is in a scattering state, the haze is higher than in the absence of applied voltage and the visibility through the glazing is reduced, thus providing privacy protection.

Advantageously, the glazing of the present invention allows control of radiant energy flow and privacy.

Also, the glazing of the present invention has improved mechanical stability when subjected to pressure or impact and is suitable to be bent.

The following terminology is used along the whole document to describe features of the invention.

The term "layer", as used in this context, shall include the common definition of the word, i.e.: a sheet, quantity, or thickness of material, typically of some homogeneous substance.

The term "glazing" should be understood as a product comprising at least one layer of a transparent material or substantially transparent material, preferably glass, which serves to provide for the transmission of light and/or to provide for viewing of the side opposite to the viewer and which is intended to be mounted in an opening in a building, vehicle, wall or roof or other framing member or enclosure.

The term "glass" can be applied to many organic and inorganic materials. From a scientific standpoint, "glass" is defined as a state of matter comprising a non-crystalline amorphous solid that lacks the long-range ordered molecular structure of true solids. Glasses have the mechanical rigidity of crystals with the random structure of liquids. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. In final products, glass layers may comprise heat absorbing glass compositions as well as infrared reflecting and other types of coatings.

"Laminates", in general, are products comprising multiple sheets of thin, relative to their length and width, material, with each thin sheet having two oppositely disposed major surfaces and typically of a relatively uniform thickness, which are permanently bonded to each other across at least one major surface of each sheet.

The term "stack" or "multilayer" refers to the arrangement in a pile manner of a plurality of layers.

With respect to a second layer located on a first layer, the term "on" should be understood as including both the option of the first and second layers being in direct contact (i.e. physical contact) and the option of having one or more additional layers located between the first layer and the second layer.

An "alignment layer" is a layer that determines the orientation of the liquid crystal molecules in the absence of an applied voltage. A homeotropic alignment layer aligns the liquid crystal molecules such that their longitudinal axes are substantially perpendicular to the alignment layer. A planar alignment layer (also named homogeneous alignment layer) aligns the liquid crystal molecules such that their longitudinal axes are substantially parallel to the alignment layer.

Total visible light transmission (*Tₜₒₜₐₗ*) is the sum of two components, namely the direct visible transmission (*T_{direct}*) and the diffuse visible transmission (*T_{diffuse}*). Direct visible transmission is measured following the ISO 9050.

Haze is defined as the proportion of light that, in passing through a material, deviates from the incident beam by greater than a predetermined scattering angle and it is measured following the ASTM 1003 using equipment such as a BYK Hazegard.

Thickness values, unless indicated to the contrary, are geometric thickness values.

When a range of values is provided in the application, it should be understood that the two limiting values of the range are also included. For example, if a range of 20 nm to 100 nm is provided, the values 20 nm and 100 nm are also included within the range.

In an embodiment, the negative dielectric anisotropy of the liquid crystal mixture is in the range from -5 to -0.1, preferably from -3 to -0.1.

In an embodiment, the liquid crystal cell is embodied as a film comprising the liquid crystal mixture and the at least one planar alignment layer. One or more additional layers can be included in the liquid crystal cell.

In an embodiment, the at least one planar alignment layer comprises a polymer, preferably a polyimide.

In an embodiment, the at least one planar alignment layer has a thickness in the range from 20 nm to 300 nm, preferably from 50 nm to 200 nm.

In an embodiment, the at least one planar alignment layer comprises a polymer, preferably a polyimide, having a thickness in the range from 20 nm to 300 nm, preferably from 50 nm to 200 nm.

In an embodiment, the at least one planar alignment layer is a single planar alignment layer. In another embodiment, the at least one planar alignment layer comprises a first planar alignment layer and a second planar alignment layer.

In an embodiment, the glazing comprises at least two bonding layers, wherein a first bonding layer is arranged between the inner major surface of the first glass layer and the switchable liquid crystal cell and a second bonding layer is arranged between the inner major surface of the second glass layer and the switchable liquid crystal cell.

In an embodiment, the at least one switchable liquid crystal cell has a multilayer structure comprising:
- a first transparent substrate;
- a first conductive layer;
- a first planar alignment layer;
- the liquid crystal mixture;
- a second planar alignment layer;
- a second conductive layer; and
- a second transparent substrate.

According to this embodiment, the at least one planar alignment layer comprises a first planar alignment layer and a second planar alignment layer.

In an embodiment, the first conductive layer is coated on the first transparent substrate.

In an embodiment, the second conductive layer is coated on the second transparent substrate.

In an embodiment, the at least one switchable liquid crystal cell has a multilayer structure comprising in this order:
- a first transparent substrate;
- a first conductive layer;
- a first planar alignment layer;
- the liquid crystal mixture;
- a second planar alignment layer;
- a second conductive layer; and
- a second transparent substrate.

The materials of the first and second transparent substrates may be the same or different from each other.

In an embodiment, the first and/or the second transparent substrate are selected from:
- glass;
- plastic materials including cellulose resin, such as TAC (triacetyl cellulose) or DAC (diacetyl cellulose);
- a COP (cyclic olefin polymer), such as a norbornene derivative ring;
- an olefin polymer;
- an acrylic resin, such as COC (cyclic olefin copolymer) or PMMA (polymethyl methacrylate);
- a polyolefin, such as PC (polycarbonate), PE (polyethylene) or PP (polypropylene);
- PVA (polyvinyl alcohol), PES (polyether sulfone), PEEK (polyether ether ketone), PEI (polyetherimide), PEN (polyethylene naphthalate) or PET (polyphenylene terephthalate); preferably PET having a thickness in the range from 20 µm to 500 µm, more preferably from 50 µm to 200 µm;
- a sheet or film of polyester, PI (polyimide), PSF (polysulfone) or fluoride resin of ethylene glycol formate; or
- any combination thereof.

In an embodiment, the first and/or the second transparent substrate comprise or are made of PET, preferably having a thickness in the range from 20 µm to 500 µm, more preferably from 50 µm to 200 µm.

The materials of the first and second conductive layers may be the same or different from each other.

In an embodiment, the first and/or second conductive layer are selected from: indium tin oxide (ITO), indium zinc oxide (IZO), indium gallium oxide (IGO), aluminum zinc oxide (AZO), bismuth zinc oxide (ATO), silver oxide, aluminum oxide, tungsten oxide, magnesium oxide, molybdenum oxide, zinc oxide, tin oxide, indium oxide, chromium oxide, ruthenium oxide, titanium oxide, nickel oxide, copper oxide, vanadium oxide, cobalt oxide, iron oxide, niobium oxide, antimony oxide, or any combination thereof; preferably ITO having a thickness in the range from 20 nm to 300 nm, more preferably from 50 nm to 200 nm.

The materials of the first and second planar alignment layers may be the same or different from each other.

In an embodiment, the first and/or second planar alignment layer comprises a polymer, preferably a polyimide.

In an embodiment, the first and/or second planar alignment layer has a thickness in the range from 20 nm to 300 nm, preferably from 50 nm to 200 nm.

In an embodiment, the first and/or second planar alignment layer comprises a polymer, preferably a polyimide, having a thickness in the range from 20 nm to 300 nm, preferably from 50 nm to 200 nm.

In an embodiment, the switchable liquid crystal cell has a multilayer structure comprising:
- a first transparent substrate comprising, or made of, PET; wherein the first transparent substrate preferably has a thickness in the range from 20 µm to 500 µm, more preferably from 50 µm to 200 µm;
- a first conductive layer comprising, or made of, ITO; wherein the first conductive layer preferably has a thickness in the range from 20 nm to 300 nm, more preferably from 50 nm to 200 nm;
- a first planar alignment layer comprising, or made of, a polymer, preferably a polyimide; wherein the first planar alignment layer preferably has a thickness in the range from 20 nm to 300 nm, preferably from 50 nm to 200 nm;
- the liquid crystal mixture;
- a second planar alignment layer comprising, or made of, a polymer, preferably a polyimide; wherein the second planar alignment layer preferably has a thickness in the range from 20 nm to 300 nm, preferably from 50 nm to 200 nm;
- a second conductive layer comprising, or made of, ITO; wherein the second conductive layer preferably has a thickness in the range from 20 nm to 300 nm, more preferably from 50 nm to 200 nm; and
- a second transparent substrate comprising, or made of, PET; wherein the second transparent substrate preferably has a thickness in the range from 20 µm to 500 µm, more preferably from 50 µm to 200 µm.

In an embodiment, the liquid crystal material comprises at least one nematic liquid crystal.

In an embodiment, the at least one dye comprises at least one dichroic dye.

In an embodiment, the at least one dichroic dye is black.

In an embodiment, the amount of dye in the liquid crystal mixture is in the range from 0.1 wt% to 5 wt%, preferably from 0.5 wt% to 4 wt%, more preferably from 0.5 wt% to 3 wt%, even more preferably from 0.5 wt% to 2 wt%; wherein wt% is weight percentage.

In an embodiment, the amount of dye in the liquid crystal mixture is in the range from 2 wt% to 4 wt%.

In an embodiment, the amount of liquid crystal material in the liquid crystal mixture is in the range from 60 wt% to 75 wt%, the amount of dye in the liquid crystal mixture is in the range from 1 wt% to 5 wt% and the amount of dimer is in the range from 25 wt% to 40 wt%, wherein the amounts add up to 100 wt%.

In an embodiment, the liquid crystal mixture has a flexoelectric coefficient having a magnitude in the range from 1 pC/m to 40 pC/m.

In an embodiment, the at least one bonding layer is a polymer, preferably a thermoplastic polymer, and more preferably a clear thermoset plastic, such as polyvinyl butyral (PVB). Additionally, ethylene vinyl acetate (EVA), thermoplastic polyurethane (TPU), polyolefin elastomers (PoE), polyethylene terephthalate (PET), optical adhesive resins (OCR), optically clear adhesive (OCA), liquid optically clear adhesives (LOCA) or any combination thereof may be used as bonding layers. The at least one bonding layer may also optionally be tinted.

In an embodiment, the switchable liquid crystal cell is configurable into two states:
- a first state wherein the switchable liquid crystal cell is semi-transparent with low haze in the absence of an applied voltage, and
- a second state wherein the switchable liquid crystal cell is opaque with high haze in the presence of an applied voltage.

According to this embodiment, the switchable liquid crystal cell is configurable in two states. When no voltage is applied, the switchable liquid crystal cell is in a first state. When an alternating-current drive voltage is applied, the switchable liquid crystal cell is in a second state.

In the first state, the switchable liquid crystal cell is semi-transparent and has a low haze. In this state, the radiant energy flow is defined without power consumption, since no voltage is applied. Also, since haze is low, visibility through the glazing is possible. This allows the glazing to be used in windows, such as sidelites, for automotive applications.

In the second state, the switchable liquid crystal cell is opaque and has a high haze. In this state, the direct visible transmission through the switchable liquid crystal cell is reduced. Also, since haze is high, visibility through the glazing is reduced, thus providing privacy protection.

According to the present invention, "semi-transparent" shall be understood as having a direct visible transmission in the range from 2% to 20%, preferably from 2% to 10%.

According to the present invention, "opaque" shall be understood as having a direct visible transmission in the range from 0% to less than 2%, preferably from 0% to 1%,

According to the present invention, "low haze" shall be understood as a haze value in the range from 1% to 20%, preferably from 1% to 7%, more preferably from 1% to less than 5%.

According to the present invention, "high haze" shall be understood as a haze value in the range from 80% to 100%, preferably from 90% to 100%.

In an embodiment, the switchable liquid crystal cell is in the second state when the applied alternating-current drive voltage is in the range from 10 V to 70 V, preferably from 20 V to 60 V. In an embodiment, the frequency of the alternating-current is in the range from 30 Hz to 70 Hz, preferably from 50 Hz to 60 Hz.

In a second inventive aspect, the invention provides an automotive glazing system comprising:
- an automotive glazing according to any of the embodiments of the first inventive aspect; and
- a control circuitry;
wherein the switchable liquid crystal cell of the automotive glazing has a multilayer structure comprising:
- a first transparent substrate;
- a first conductive layer;
- a first planar alignment layer;
- the liquid crystal mixture;
- a second planar alignment layer;
- a second conductive layer; and
- a second transparent substrate;
wherein the control circuitry is configured to apply across the first and second conductive layers:
- a first alternating-current drive voltage to place the switchable liquid crystal cell in a semi-transparent state with low haze; and
- a second alternating-current drive voltage to place the switchable liquid crystal cell in an opaque state with high haze.

In an embodiment of the second inventive aspect, the first voltage is 0 V, and the second voltage is in the range from 10 V to 70 V, preferably from 20 V to 60 V.

In an embodiment of the second inventive aspect, the control circuitry is configured to apply an alternating-current having a frequency in the range from 30 Hz to 70 Hz, preferably from 50 Hz to 60 Hz.

In an embodiment of the second inventive aspect, the automotive glazing has a direct visible transmission in the range from 2% to 20%, preferably from 2% to 10%, when the first voltage is applied and a direct visible transmission in the range from 0% to less than 2%, preferably from 0% to 1%, when the second voltage is applied.

In an embodiment of the second inventive aspect, the automotive glazing has a haze value in the range from 1% to 20%, preferably from 1% to 7%, more preferably from 1% to less than 5%, when the first voltage is applied and a haze value in the range from 80% to 100%, preferably from 90% to 100%, when the second voltage is applied.

In a third inventive aspect, the invention provides an automotive roof or sidelite window comprising an automotive glazing according to any of the embodiments of the first inventive aspect or an automotive glazing system according to any of the embodiments of the second inventive aspect.

In a fourth inventive aspect, the invention provides a vehicle comprising an automotive roof or sidelite window according to any of the embodiments of the third inventive aspect.

The term "vehicle" in the present invention includes, but is not limited to, road vehicles (e.g., cars, buses, trucks, agricultural and construction vehicles, cabin motorbikes), railway vehicles (e.g., locomotives, coaches), aircraft (e.g., airplanes, helicopters), boats, ships and the like. For instance, the vehicle may be a road vehicle and more particularly a car.

In an embodiment, the glazing is arranged in the vehicle with the outer major surface of the first glass layer facing the exterior of the vehicle and with the outer major surface of the second glass layer facing the interior of the vehicle.

All the features described in this specification (including the claims, description and drawings) can be combined in any combination, with the exception of combinations of mutually exclusive features and/or steps.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure schematically shows a side view of an automotive glazing according to an embodiment of the present invention.
- Figure 2: This figure schematically shows a side view of a switchable liquid crystal cell according to an embodiment of the present invention.
- Figure 3: This figure schematically shows the effect of an electric field on a liquid crystal material.
- Figure 4: This figure schematically shows a side view of a switchable liquid crystal cell according to an embodiment of the present invention.
- Figure 5: This figure schematically shows the two states of a switchable liquid crystal cell according to an embodiment of the present invention.
- Figure 6: This figure schematically shows an automotive glazing system according to an embodiment of the present invention.

### DETAILED DESCRIPTION OF THE INVENTION

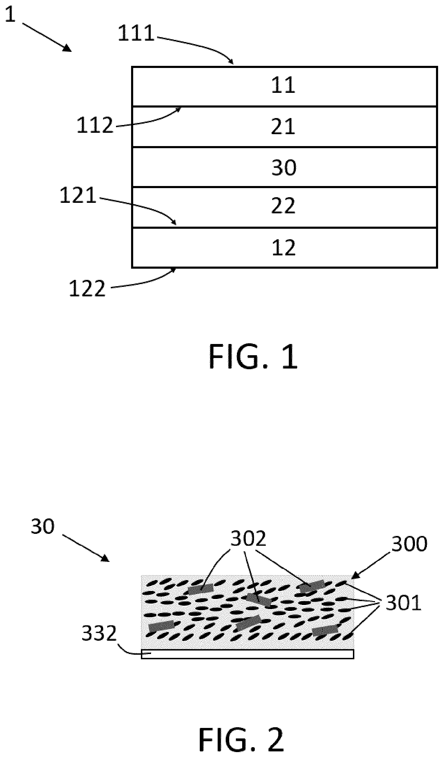

The present invention provides an automotive glazing (1) comprising a first glass layer (11), a second glass layer (12), at least one bonding layer (21, 22) and at least one reverse mode switchable liquid crystal cell (30). Figure 1 schematically shows a side view of an automotive glazing according to an embodiment of the present invention.

The first glass layer (11) has an outer major surface (111) and an opposed inner major surface (112). Similarly, the second glass layer (12) has an inner major surface (121) and an opposed outer major surface (122). The inner major surface (112) of the first glass layer (11) is oriented towards the inner major surface (121) of the second glass layer (12).

The switchable liquid crystal cell (30) is arranged between the inner major surface (112) of the first glass layer (11) and the inner major surface (121) of the second glass layer (12).

The at least one bonding layer (21, 22) is also arranged between the inner major surface (112) of the first glass layer (11) and the inner major surface (121) of the second glass layer (12). In this illustrated embodiment, the glazing comprises a first bonding layer (21) arranged between the first glass layer (11) and the switchable liquid crystal cell (30), and a second bonding layer (22) arranged between the second glass layer (12) and the switchable liquid crystal cell (30). The bonding layers (21, 22) bond the layers of the glazing together.

Figure 2 schematically shows a side view of a switchable liquid crystal cell (30) according to an embodiment of the present invention. The switchable liquid crystal cell (30) comprises a liquid crystal mixture (300) comprising a liquid crystal material (301), a dimer and at least one dye (302), wherein the liquid crystal mixture (300) has a negative dielectric anisotropy. The switchable liquid crystal cell (30) also comprises at least one planar alignment layer (332).

In figure 2, the liquid crystal material (301) is schematically depicted as black elongated shapes, whereas the dye (302) is schematically depicted as grey rectangles. The dimer, although present in the liquid crystal mixture (300), is not depicted in the figure.

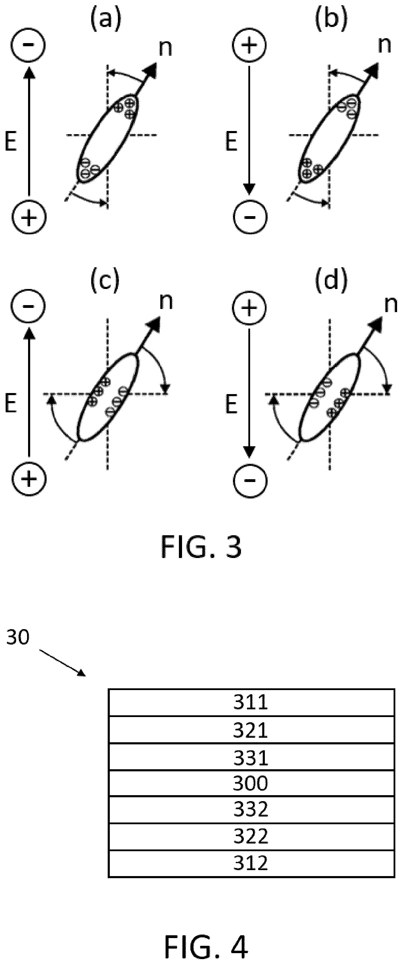

Figure 3 schematically shows the effect of an electric field on a liquid crystal material.

The energy of an anisotropic dielectric in an electric field is lowest when the largest component of the permittivity tensor is aligned along the direction of the applied field. Figure 3 gives an intuitive description of the effect of an applied electric field (E) on a region of a nematic liquid crystal for a liquid crystal material having positive dielectric anisotropy (figures 3(a) and 3(b)) and for a liquid crystal material having negative dielectric anisotropy (figures 3(c) and 3(d)). In each case, the ellipse indicates a polarizable region of the liquid crystal material comprising many liquid crystal molecules and the average molecular orientation angle, i.e. the n-director, is along the long axis of the ellipse.

As mentioned above, in figures 3(a)-3(b) the situation for a material with positive dielectric anisotropy is illustrated, for which the dielectric constant parallel to the n-director, ε_{||}, is the largest component. The liquid crystal responds to the applied electric field (E) by polarizing, predominantly parallel to the n-director. The separated charge then exerts a torque that acts to rotate the n-director to reorient along the direction of the electric field, in order to reach the lowest energy configuration. This torque, and the resultant rotation direction, is in the same direction regardless of the polarity of the electric field (E), as shown in figures 3(a)-3(b).

Figures 3(c)-3(d) illustrate the situation for a material with negative dielectric anisotropy, for which the dielectric constant perpendicular to the n-director, ε_{⊥}, is the largest component. In this case, the polarization in response to the applied electric field is predominantly perpendicular to the n-director and the separated charge then exerts a torque that acts to rotate the n-director to reorient to be perpendicular to the direction of the electric field in order to reach the lowest energy configuration.

The liquid crystal mixture of the present invention has negative dielectric anisotropy and thus corresponds to the case shown in figures 3(c)-3(d).

In an embodiment, the dielectric anisotropy of the liquid crystal mixture (300) is in the range from -5 to -0.1, preferably from -3 to -0.1.

Figure 4 schematically shows a side view of a switchable liquid crystal cell (30) according to an embodiment of the present invention. In this embodiment, the switchable liquid crystal cell (30) has a multilayer structure comprising, in this order:
- a first transparent substrate (311);
- a first conductive layer (321);
- a first planar alignment layer (331);
- the liquid crystal mixture (300);
- a second planar alignment layer (332);
- a second conductive layer (322); and
- a second transparent substrate (312).

In an embodiment, the first (311) and/or second (312) transparent substrate are selected from:
- glass;
- plastic materials including cellulose resin, such as triacetyl cellulose or diacetyl cellulose;
- a cyclic olefin polymer, such as a norbornene derivative ring;
- an olefin polymer;
- an acrylic resin, such as cyclic olefin copolymer or polymethyl methacrylate;
- a polyolefin, such as polycarbonate, polyethylene or polypropylene;
- polyvinyl alcohol, polyether sulfone, polyether ether ketone, polyetherimide, polyethylene naphthalate or polyphenylene terephthalate; preferably polyphenylene terephthalate having a thickness in the range from 20 µm to 500 µm, more preferably from 50 µm to 200 µm;
- a sheet or film of polyester, polyimide, polysulfone or fluoride resin of ethylene glycol formate; or
- any combination thereof.

In an embodiment, the first (321) and/or second (322) conductive layer are selected from: indium tin oxide, indium zinc oxide, indium gallium oxide, aluminum zinc oxide, bismuth zinc oxide, silver oxide, aluminum oxide, tungsten oxide, magnesium oxide, molybdenum oxide, zinc oxide, tin oxide, indium oxide, chromium oxide, ruthenium oxide, titanium oxide, nickel oxide, copper oxide, vanadium oxide, cobalt oxide, iron oxide, niobium oxide, antimony oxide, or any combination thereof; preferably indium tin oxide having a thickness in the range from 20 nm to 300 nm, more preferably from 50 nm to 200 nm.

In an embodiment, the first (331) and/or second (332) planar alignment layer comprises a polymer, preferably a polyimide, having a thickness in the range from 20 nm to 300 nm, preferably from 50 nm to 200 nm.

In an embodiment, the liquid crystal material (541) comprises at least one nematic liquid crystal.

In an embodiment, the at least one dye (302) comprises at least one dichroic dye.

In an embodiment, the switchable liquid crystal cell (30) is configurable into two states:
- a first state wherein the switchable liquid crystal cell (30) is semi-transparent with low haze in the absence of an applied voltage, and
- a second state wherein the switchable liquid crystal cell (30) is opaque with high haze in the presence of an applied voltage.

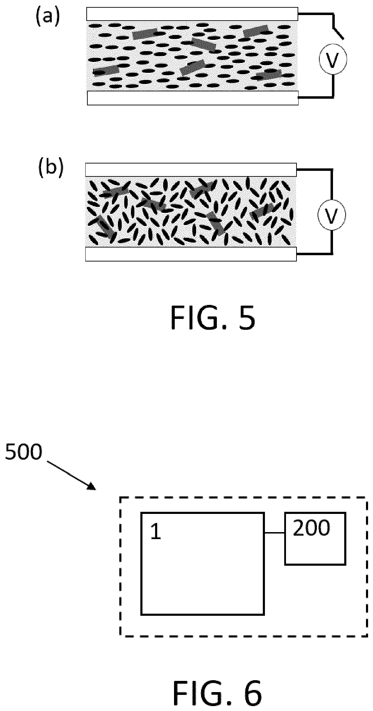

Figure 5 schematically shows the two states of a switchable liquid crystal cell (30) according to an embodiment of the present invention, wherein the liquid crystal material comprises a nematic liquid crystal and wherein the at least one dye comprises at least one dichroic dye.

In figure 5(a) there is no applied voltage, whereas in figure 5(b) an alternating-current drive voltage is applied between the first (321) and second (322) conductive layers. In figures 5(a)-5(b), not all the layers comprised in the switchable liquid crystal cell (30) are shown, since the figures are intended to illustrate the behaviour of the liquid crystal mixture (300) in each state.

In figure 5(a), in the absence of an applied voltage, the liquid crystal molecules present in the liquid crystal material tend to align parallel to the at least one planar alignment layer (331, 332). In this first state, there is light absorption due to the alignment of the dye molecules present in the dichroic dye but no light scattering.

In figure 5(b), when a voltage is applied, the liquid crystal molecules present in the liquid crystal material and the dye molecules present in the dichroic dye arrange to form a poly-domain structure, with local differences in the orientation of the molecules, due to flexoelectric interactions. In this second state, there is more light scattering.

In an embodiment, the switchable liquid crystal cell (30) is in the second state when the applied alternating-current drive voltage is in the range from 10 V to 70 V, preferably from 20 V to 60 V. In an embodiment, the frequency of the alternating-current is in the range from 30 Hz to 70 Hz, preferably from 50 Hz to 60 Hz.

In an embodiment, the switchable liquid crystal cell (30) has a multilayer structure comprising:
- a first transparent substrate (311) comprising, or made of, PET; wherein the first transparent substrate preferably has a thickness in the range from 20 µm to 500 µm, more preferably from 50 µm to 200 µm;
- a first conductive layer (321) comprising, or made of, ITO; wherein the first conductive layer preferably has a thickness in the range from 20 nm to 300 nm, more preferably from 50 nm to 200 nm;
- a first planar alignment layer (331) comprising, or made of, a polymer, preferably a polyimide; wherein the first planar alignment layer preferably has a thickness in the range from 20 nm to 300 nm, preferably from 50 nm to 200 nm;
- the liquid crystal mixture (300);
- a second planar alignment layer (332) comprising, or made of, a polymer, preferably a polyimide; wherein the second planar alignment layer preferably has a thickness in the range from 20 nm to 300 nm, preferably from 50 nm to 200 nm;
- a second conductive layer (322) comprising, or made of, ITO; wherein the second conductive layer preferably has a thickness in the range from 20 nm to 300 nm, more preferably from 50 nm to 200 nm; and
- a second transparent substrate (312) comprising, or made of, PET; wherein the second transparent substrate preferably has a thickness in the range from 20 µm to 500 µm, more preferably from 50 µm to 200 µm.

In an embodiment, the amount of liquid crystal material in the liquid crystal mixture is in the range from 60 wt% to 75 wt%, the amount of dye in the liquid crystal mixture is in the range from 1 wt% to 5 wt% and the amount of dimer is in the range from 25 wt% to 40 wt%, wherein the amounts add up to 100 wt%.

In an embodiment, the liquid crystal mixture has a flexoelectric coefficient having a magnitude in the range from 1 pC/m to 40 pC/m.

In an embodiment, the liquid crystal mixture comprises:
- Liquid crystal material: MAT 978 (10 wt%) and ZLI 4330 (62 wt%)
- Dimer: CB7CB (13 wt%) and CB9CB (12 wt%)
- Black dichroic-dye (3 wt%)

In an embodiment, the thickness of the liquid crystal mixture (300) is 10 µm.

Figure 6 schematically shows an automotive glazing system (500) according to an embodiment of the present invention. The automotive glazing system (500) comprises an automotive glazing (1) according to the present invention and a control circuitry (200).

With respect to the automotive glazing system (500), the switchable liquid crystal cell (30) of the automotive glazing (1) has a multilayer structure comprising:
- a first transparent substrate (311);
- a first conductive layer (321);
- a first planar alignment layer (331);
- the liquid crystal mixture (300);
- a second planar alignment layer (332);
- a second conductive layer (322); and
- a second transparent substrate (312).

The control circuitry (200) is configured to apply across the first (321) and second (322) conductive layers:
- a first alternating-current drive voltage to place the switchable liquid crystal cell (30) in a semi-transparent state with low haze; and
- a second alternating-current drive voltage to place the switchable liquid crystal cell (30) in an opaque state with high haze.

In an embodiment of the automotive glazing system (500):
- the first voltage is 0 V, and
- the second voltage is in the range from 10 V to 70 V, preferably from 20 V to 60 V.

In an embodiment, the control circuitry (200) is configured to apply an alternating-current having a frequency in the range from 30 Hz to 70 Hz, preferably from 50 Hz to 60 Hz.

In an embodiment of the automotive glazing system (500), the automotive glazing (1) has a direct visible transmission in the range from 2% to 20%, preferably from 2% to 10%, when the first voltage is applied and a direct visible transmission in the range from 0% to less than 2%, preferably from 0% to 1%, when the second voltage is applied.

In an embodiment of the automotive glazing system (500), the automotive glazing (1) has a haze value in the range from 1% to 20%, preferably from 1% to 7%, more preferably from 1% to less than 5%, when the first voltage is applied, and a haze value in the range from 80% to 100%, preferably from 90% to 100%, when the second voltage is applied.

## Claims

1. An automotive glazing (1), comprising:
- a first glass layer (11) having an outer major surface (111) and an inner major surface (112), wherein the outer major surface (111) is opposite to the inner major surface (112);
- a second glass layer (12) having an inner major surface (121) and an outer major surface (122), wherein the outer major surface (122) is opposite to the inner major surface (121);
- at least one bonding layer (21, 22) arranged between the inner major surface (112) of the first glass layer (11) and the inner major surface (121) of the second glass layer (12);
- at least one reverse mode switchable liquid crystal cell (30) arranged between the inner major surface (112) of the first glass layer (11) and the inner major surface (121) of the second glass layer (12);
wherein the at least one switchable liquid crystal cell (30) comprises a liquid crystal mixture (300) comprising a liquid crystal material (301), a dimer and at least one dye (302), wherein the liquid crystal mixture (300) has a negative dielectric anisotropy; and wherein the at least one switchable liquid crystal cell (30) comprises at least one planar alignment layer (331, 332).

2. The automotive glazing (1) of claim 1, wherein the negative dielectric anisotropy is in the range from -5 to -0.1, preferably from -3 to -0.1.

3. The automotive glazing (1) of any of the previous claims, wherein the at least one switchable liquid crystal cell (30) has a multilayer structure comprising:
- a first transparent substrate (311);
- a first conductive layer (321);
- a first planar alignment layer (331);
- the liquid crystal mixture (300);
- a second planar alignment layer (332);
- a second conductive layer (322); and
- a second transparent substrate (312).

4. The automotive glazing (1) of claim 3, wherein the first (311) and/or second (312) transparent substrate are selected from:
- glass;
- plastic materials including cellulose resin, such as triacetyl cellulose or diacetyl cellulose;
- a cyclic olefin polymer, such as a norbornene derivative ring;
- an olefin polymer;
- an acrylic resin, such as cyclic olefin copolymer or polymethyl methacrylate;
- a polyolefin, such as polycarbonate, polyethylene or polypropylene;
- polyvinyl alcohol, polyether sulfone, polyether ether ketone, polyetherimide, polyethylene naphthalate or polyphenylene terephthalate; preferably polyphenylene terephthalate having a thickness in the range from 20 µm to 500 µm, more preferably from 50 µm to 200 µm;
- a sheet or film of polyester, polyimide, polysulfone or fluoride resin of ethylene glycol formate; or
- any combination thereof.

5. The automotive glazing (1) of claim 3 or 4, wherein the first (321) and/or second (322) conductive layer are selected from: indium tin oxide, indium zinc oxide, indium gallium oxide, aluminum zinc oxide, bismuth zinc oxide, silver oxide, aluminum oxide, tungsten oxide, magnesium oxide, molybdenum oxide, zinc oxide, tin oxide, indium oxide, chromium oxide, ruthenium oxide, titanium oxide, nickel oxide, copper oxide, vanadium oxide, cobalt oxide, iron oxide, niobium oxide, antimony oxide, or any combination thereof; preferably indium tin oxide having a thickness in the range from 20 nm to 300 nm, more preferably from 50 nm to 200 nm.

6. The automotive glazing (1) of any of claims 3 to 5, wherein the first (331) and/or second (332) planar alignment layer comprises a polymer, preferably a polyimide, having a thickness in the range from 20 nm to 300 nm, preferably from 50 nm to 200 nm.

7. The automotive glazing (1) of any of the previous claims, wherein the liquid crystal material (301) comprises at least one nematic liquid crystal.

8. The automotive glazing (1) of any of the previous claims, wherein the at least one dye (302) comprises at least one dichroic dye.

9. The automotive glazing (1) of any of the previous claims, wherein the switchable liquid crystal cell (30) is configurable into two states:
- a first state wherein the switchable liquid crystal cell (30) is semi-transparent with low haze in the absence of an applied voltage, and
- a second state wherein the switchable liquid crystal cell (30) is opaque with high haze in the presence of an applied voltage.

10. An automotive glazing system (500) comprising:
- an automotive glazing (1) according to claim 3 or according to any of the previous claims and claim 3; and
- a control circuitry (200);
wherein the control circuitry (200) is configured to apply across the first (321) and second (322) conductive layers:
- a first alternating-current drive voltage to place the switchable liquid crystal cell (30) in a semi-transparent state with low haze; and
- a second alternating-current drive voltage to place the switchable liquid crystal cell (30) in an opaque state with high haze.

11. The automotive glazing system (500) of claim 10, wherein:
- the first voltage is 0 V, and
- the second voltage is in the range from 10 V to 70 V, preferably from 20 V to 60 V.

12. The automotive glazing system (500) of claim 10 or 11, wherein the control circuitry (200) is configured to apply an alternating-current having a frequency in the range from 30 Hz to 70 Hz, preferably from 50 Hz to 60 Hz.

13. The automotive glazing system (500) of any of claims 10 to 12, wherein the automotive glazing (1) has a direct visible transmission in the range from 2% to 20%, preferably from 2% to 10%, when the first voltage is applied and a direct visible transmission in the range from 0% to less than 2%, preferably from 0% to 1%, when the second voltage is applied.

14. The automotive glazing system (500) of any of claims 10 to 13, wherein the automotive glazing (1) has a haze value in the range from 1% to 20%, preferably from 1% to 7%, more preferably from 1% to less than 5%, when the first voltage is applied and a haze value in the range from 80% to 100%, preferably from 90% to 100%, when the second voltage is applied.

15. An automotive roof or sidelite window comprising an automotive glazing (1) according to any of claims 1 to 9 or an automotive glazing system (500) according to any of claims 10 to 14.
